# EUROPEAN PATENT SPECIFICATION

(11) **EP 3 184 983 B1**
(45) Date of publication and mention of the grant of the patent: **12.06.2019**
(21) Application number: 16205534.7
(22) Date of filing: 20.12.2016
(51) Int. Cl.: G01L 19/00, G01L 19/06, G01L 19/14

(54) **MANUFACTURING METHOD OF PRESSURE SENSOR**
HERSTELLUNGSVERFAHREN FÜR DRUCKSENSOR
PROCÉDÉ DE FABRICATION DE CAPTEUR DE PRESSION

(30) Priority: 22.12.2015 JP 2015250198
(43) Date of publication of application: 28.06.2017
(73) Proprietor: Nagano Keiki Co., Ltd., Tokyo 143-8544 (JP)
(72) Inventor: YAMAGISHI, Nobutaka, Ohta-ku, Tokyo 143-8544 (JP); YAMASHITA, Naoki, Ohta-ku, Tokyo 143-8544 (JP)
(74) Representative: Jenkins, Peter David

(56) References cited:
- EP-A1- 1 582 853
- EP-A2- 1 619 488
- WO-A1-96/05493
- JP-A- H1 046 239
- US-B1- 6 639 173

## Description

### TECHNICAL FIELD

The present invention relates to a manufacturing method of a pressure sensor.

### BACKGROUND ART

A pressure sensor including a joint attached to a target member and a pressure detecting element provided to the joint has been known.

The joint and the pressure detecting element of the pressure sensor are welded to each other (Patent Literature 1: JP Patent Publication No.3556165).

The pressure detecting element is also referred to as a sensor module. In Patent Literature 1, the pressure detecting element is provided by integrating a metal diaphragm with an upper surface of a cylindrical support made of a precipitation hardening stainless steel. The cylindrical support and a metal joint are beam-welded.

Conventionally, a sensor module is optionally heated for manufacture.

For instance, a body of the metal diaphragm is formed by a cold working using a predetermined alloy. An insulative film is formed on the obtained body by a chemical vapor deposition while the body is heated at 400 degrees C or more, thereby providing a pressure sensor (Patent Literature 2: JP Patent Publication No. 3084304).

Further, a precipitation hardening stainless steel in an unhardened state is forged and the like to form an intermediate molded body. The intermediate molded body is heated, thereby providing a diaphragm for a pressure sensor (Patent Literature 3: JP Patent Publication No. 3688063). The heating treatment of Patent Literature 3 includes: a re-solid solution treatment for releasing a processing strain generated during the forging and the like; and a precipitation hardening treatment to be performed for eliminating the processing strain after a cooling treatment after the re-solid solution treatment.

When two heated metal members are welded to each other, heating effects on a weld portion and surroundings thereof are reset, so that a strength and a hardness of the weld portion and the surroundings are inferior to those in other parts of a base metal. For this reason, when a large pressure is applied on the welded metal members, cracks are generated on the weld portion and the surroundings in which the strength and the hardness are low, resulting in breakage.

In a conventional example of Patent Literature 1, since the cylindrical support made of a precipitation hardening stainless steel is beam-welded to the metal joint, the weld portion between the cylindrical support and the joint are weak. Even when a pressure is applied to the weld portion, since materials for the cylindrical support and the joint are determined depending on a range of an applied pressure and a welding method is contrived, no disadvantage is caused in a typical pressure range. However, recently, the pressure range required in the market becomes extremely high. When the pressure sensor of Patent Literature 1 is used in a high pressure range, the weld portion and the surroundings may be broken.

Patent Literature 2 only discloses that the body of the metal diaphragm is formed and the body is heated at 400 degrees C or more, but fails to disclose the bonding of the body and the joint. Although it can be conceived from Patent Literature 2 that the heated body of the metal diaphragm is welded to the joint, the weld portion and the surroundings may be broken when used in a high pressure range as in Patent Literature 1.

Patent Literature 3 only discloses that the intermediate molded body is subjected to the heat treatment including the re-solid solution treatment and the precipitation hardening treatment, but fails to disclose that the heated pressure sensor diaphragm is bonded to the joint. Although it can be conceived that the heated pressure sensor diaphragm is welded to the joint, the weld portion and the surroundings may be broken when used in a high pressure in the same manner as disclosed in Patent Literature 1. EP-A-1619488 discloses a pressure sensor including a pressure introducing joint comprising a cylindrical portion forming a flow path and a pressure detector comprising a diaphragm, wherein the diaphragm is a bottomed cylindrical member, in which a thin-wall portion as a bottom and a cylindrical portion are integrated. The pressure introducing joint is welded to the diaphragm of the pressure detector.

### SUMMARY OF THE INVENTION

An object of the invention is to provide a manufacturing method of a pressure sensor capable of preventing a weld portion and surroundings thereof from being broken even under a high pressure.

According to an aspect of the invention, a manufacturing method of a pressure sensor, the pressure sensor including: a metal joint attached to a target member and having an introduction hole configured to flow a measurement target fluid therethrough; and a sensor module metal member including: a cylindrical portion provided to the joint; a diaphragm integrated with an end of the cylindrical portion; and a dent configured to receive the measurement target fluid from the introduction hole, includes: welding the joint to the sensor module metal member; and subsequently, heating the joint and the sensor module metal member, wherein the heating after the welding of the joint and the sensor module metal member is a precipitation hardening treatment including heating and leaving the joint and the sensor module metal member to stand until cool for precipitation hardening.

According to another aspect of the invention, a manufacturing method of a pressure sensor, the pressure sensor including: a metal joint attached to a target member and having an introduction hole configured to flow a measurement target fluid therethrough; and a sensor module metal member including: a cylindrical portion provided to the joint; a diaphragm integrated with an end of the cylindrical portion; and a dent configured to receive the measurement target fluid from the introduction hole, includes: welding the joint to the sensor module metal member; and subsequently, heating the joint and the sensor module metal member, wherein the heating includes: a re-solid solution treatment for uniformizing rough texture of the joint and the sensor module metal member caused by being welded; and, after the re-solid solution treatment, a precipitation hardening treatment including heating and leaving the joint and the sensor module metal member to stand until cool for precipitation hardening to improve strength of the welded portion and surroundings thereof.

With this arrangement, since the re-solid solution treatment and the precipitation hardening treatment are consecutively performed, the hardness of the weld portion and the surroundings thereof becomes approximately equal to the hardness of the parts other than the weld portion and the surroundings thereof.

In the above aspects of the invention, since the joint and the sensor module metal member are heated after being welded, strength of the weld portion and surroundings thereof is increased. Hardness of the heated weld portion and surroundings thereof is increased to be close to hardness of other parts. Accordingly, even when the measurement target fluid to be introduced to the sensor module metal member has a high pressure, the joint and the sensor module metal member can be prevented from being broken at the weld portion and the surroundings thereof.

In either of the above arrangements, it is preferable that the method further includes attaching a detector having a strain gauge to the diaphragm of the sensor module metal member, after the heating of the joint and the sensor module metal member.

With this arrangement, since the detector having the strain gauge is attached to the diaphragm after the sensor module metal member is heated, a measurement error caused by heating the strain gauge itself is avoidable.

With this arrangement, since the heating treatment performed after the welding treatment is only the precipitation hardening treatment, a manufacturing procedure can be simplified.

### BRIEF DESCRIPTION OF DRAWING(S)

Fig. 1 is a side elevational view of a pressure sensor manufactured in an exemplary embodiment of the invention.
Figs. 2A to 2D schematically illustrate a manufacturing method in the above exemplary embodiment.
Fig. 3A is a front elevational view of a test piece used in Examples.
Fig. 3B is a front elevational view of another test piece used in Examples.
Fig. 4 is a graph showing a dimensional change of the heated test pieces.
Fig. 5A is a copy of a microphotograph of an entirety of the test piece in Example 1.
Fig. 5B is a copy of an enlarged microphotograph of a part of the test piece at a position B in Fig. 5A in Example 1.
Fig. 5C is a copy of an enlarged microphotograph of a part of the test piece at a position C in Fig. 5A in Example 1.
Fig. 5D is a copy of an enlarged microphotograph of a part of the test piece at a position D in Fig. 5A in Example 1.
Fig. 6A is a copy of a microphotograph of an entirety of the test piece in Example 2.
Fig. 6B is a copy of an enlarged microphotograph of a part of the test piece at a position B in Fig. 6A in Example 2.
Fig.6C is a copy of an enlarged microphotograph of a part of the test piece at a position C in Fig. 6A in Example 2.
Fig. 6D is a copy of an enlarged microphotograph of a part of the test piece at a position D in Fig. 6A in Example 2.
Fig. 7A is a copy of a microphotograph of an entirety of the test piece in Reference Example 1.
Fig. 7B is a copy of an enlarged microphotograph of a part of the test piece at a position B in Fig. 7A in Reference Example 1.
Fig. 7C is a copy of an enlarged microphotograph of a part of the test piece at a position C in Fig. 7A in Reference Example 1.
Fig. 7D is a copy of an enlarged microphotograph of a part of the test piece at a position D in Fig. 7A in Reference Example 1.
Fig. 8A is a copy of a microphotograph of an entirety of the test piece in Comparative Example.
Fig. 8B is a copy of an enlarged microphotograph of a part of the test piece at a position B in Fig. 8A in Comparative Example.
Fig. 8C is a copy of an enlarged microphotograph of a part of the test piece at a position C in Fig. 8A in Comparative Example.
Fig. 8D is a copy of an enlarged microphotograph of a part of the test piece at a position D in Fig. 8A in Comparative Example.
Fig. 9 is a graph showing a hardness distribution at and near a weld portion in Example 1.
Fig. 10 is a graph showing a hardness distribution at and near a weld portion in Example 2.
Fig. 11 is a graph showing a hardness distribution at and near a weld portion in Reference Example 1.
Fig. 12 is a graph showing a hardness distribution at and near a weld portion in Comparative Example.

### DESCRIPTION OF EMBODIMENT(S)

Exemplary embodiment(s) of the invention will be described with reference to the attached drawings.

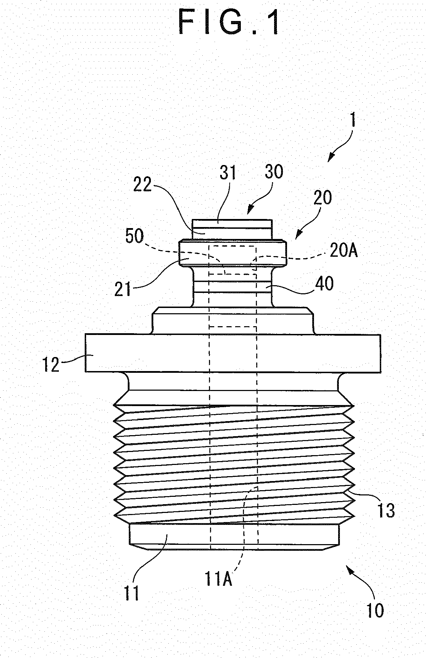

As shown in Fig. 1, a pressure sensor 1 includes: a joint 10 attached to a target member (not shown); a sensor module metal member 20 provided to the joint 10; and a detector 30 provided to the sensor module metal member 20.

The joint 10 is made of stainless steel SUS630 or other metal materials and is structured to include a shaft 11 and a flange 12 integrated with the shaft 11.

A male thread 13 is formed on an outer circumference of the shaft 11. An introduction hole 11A configured to flow a measurement target fluid therethrough is formed in the shaft 11 in an axial direction thereof.

The sensor module metal member 20 is made of stainless steel SUS630 or other metal materials and is structured to include a cylindrical portion 21 provided to the joint 10 and a diaphragm 22 integrated with an end of the cylindrical portion 21.

The sensor module metal member 20 has a dent 20A configured to receive the measurement target fluid through the introduction hole 11A.

The joint 10 is bonded to the cylindrical portion 21 through a weld portion 40.

A welding pipe 50 is provided at a position corresponding to the weld portion 40 in the introduction hole 11A of the joint 10 and in the dent 20A of the sensor module metal member 20. The welding pipe 50 is made of stainless steel SUS304 or other metal materials.

The detector 30 includes a strain gauge 31 attached to a flat surface of the diaphragm 22. The strain gauge 31 is attached to the diaphragm 22, for instance, using a glass binder. It should be noted that Fig. 1 shows the strain gauge 31 at a larger thickness than an actual thickness in order that a structure of the strain gauge 31 is easily understood.

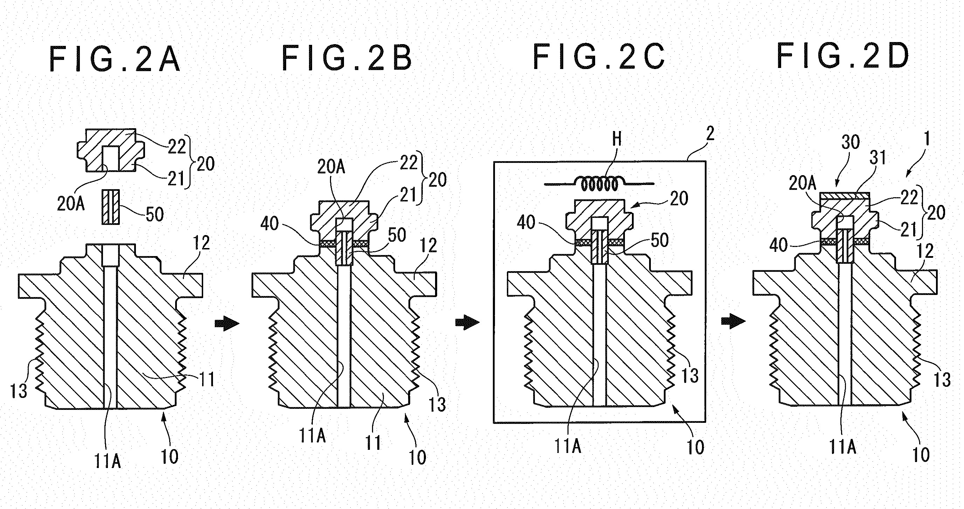

Figs. 2A to 2D show a manufacturing method of the pressure sensor 1. A step for holding the welding pipe 50 is formed in the introduction hole 11A of the joint 10 as shown in Figs. 2A to 2D. However, no step may be formed as shown in Fig. 1.

Fig. 2A shows that the joint 10 and the sensor module metal member 20 are ready for assembly. As shown in Fig. 2A, the joint 10 and the sensor module metal member 20, which are not yet heated, and the welding pipe 50 are prepared. In this state, the joint 10 and the sensor module metal member 20 which are not welded to each other are subjected to a solid solution treatment defined in JIS and the like.

The joint 10 and the sensor module metal member 20 are brought into contact with each other while a first end of the welding pipe 50 is inserted into the introduction hole 11A of the joint 10 and a second end of the welding pipe 50 is inserted into the dent 20A of the sensor module metal member 20. At this time, a position of the welding pipe 50 corresponds to a position at which the joint 10 is in contact with the sensor module metal member 20.

Fig. 2B shows the joint 10 and the sensor module metal member 20 after being welded to each other.

Electron beam welding is applied to an outer circumference of a contact portion between the joint 10 and the sensor module metal member 20. The electron beam welding is applied along the outer circumference on the contact portion between the joint 10 and the sensor module metal member 20. By the electron beam welding, the weld portion 40 is formed between the joint 10 and the sensor module metal member 20.

Fig. 2C shows that the joint 10 and the sensor module metal member 20 welded to each other are being heated.

Fig. 2C shows a furnace 2 provided with a heater H. Inside the furnace 2, the joint 10 and the sensor module metal member 20 which are bonded to each other via the weld portion 40 are housed.

Treatment in the furnace 2 includes: a first heating mode (i.e., precipitation hardening treatment) in which the joint 10 and the sensor module metal member 20 welded to each other are heated and left to stand until cool, thereby performing precipitation hardening; and a second heating mode including a re-solid solution treatment for uniformizing rough texture of the joint 10 and the sensor module metal member 20 caused by being welded and a precipitation hardening treatment in which, after the re-solid solution treatment, the joint 10 and the sensor module metal member 20 are heated and left to stand until cool, thereby performing precipitation hardening.

The precipitation hardening treatment conducted in the first heating mode is an H900 heating treatment defined in JIS. For instance, when the joint 10 and the sensor module metal member 20 are made of stainless steel SUS630, the joint 10 and the sensor module metal member 20 are kept at a temperature in a range from 470 degrees C to 490 degrees C in the furnace 2 for two hours.

The precipitation hardening treatment conducted in the second heating mode is the same as the precipitation hardening treatment conducted in the first heating mode.

The re-solid solution treatment conducted in the second heating mode is an S heating treatment defined in JIS and is also referred to as a solution treatment. The re-solid solution treatment refers to a treatment in which an alloy component of a metal material is melted into a solid content while being heated and kept at an appropriate temperature and is rapidly cooled so as not to form precipitate. For instance, when the joint 10 and the sensor module metal member 20 are made of stainless steel SUS630, the joint 10 and the sensor module metal member 20 are heated and kept in a range from 1020 degrees C to 1060 degrees C in the furnace 2 and rapidly cooled.

Fig. 2D shows the detector 30 attached to the sensor module metal member 20.

As shown in Fig. 2D, the detector 30 including the strain gauge 31 is fixed by a glass binder on a flat surface of the diaphragm 22 of the sensor module metal member 20 after the heating treatment.

### Examples

Next, Examples for verifying the advantages of the invention will be described. Test Piece

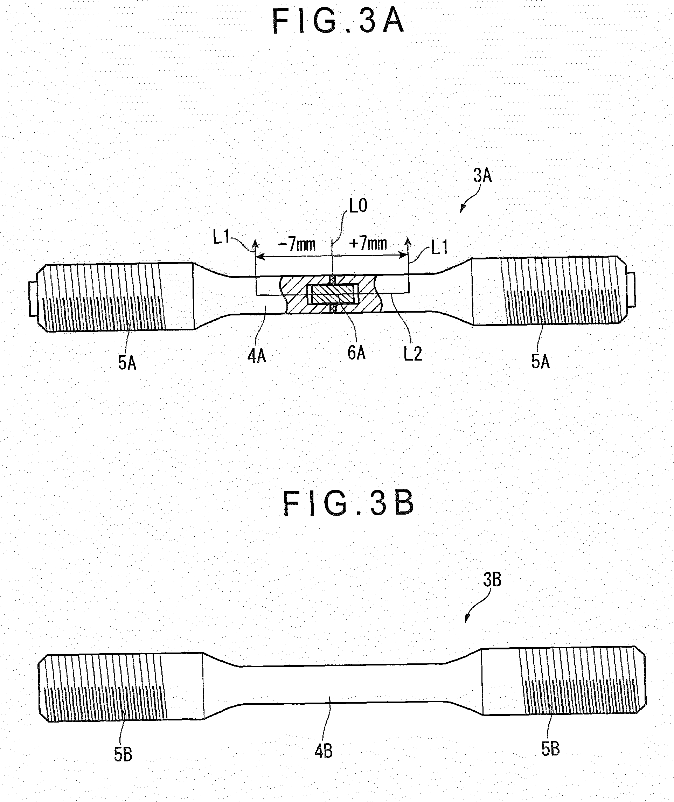

Figs. 3A and 3B show test pieces.

Fig. 3A shows a welded test piece 3A.

The welded test piece 3A is formed by integrating large-diameter portions 5A with each of ends of a small-diameter portion 4A. A member 6A corresponding to a welding pipe is buried at an axial center of the small-diameter portion 4A and electron beam welding is applied along an outer circumference of the small-diameter portion 4A. A male thread is formed on each of the large-diameter portions 5A of the welded test piece 3A.

A material of the welded test piece 3A is stainless steel SUS630. Before the welding treatment, two pieces each formed by integrating a half of the small-diameter portion with one of the large-diameter portions are prepared. Electron beam welding is applied on the two pieces while the small-diameter portions of the two pieces abut on each other.

Fig. 3B shows an integrated test piece 3B.

The integrated test piece 3B is used for comparing with experiment results of the welded test piece 3A. The outline and the material of the integrated test piece 3B are the same as those of the welded test piece 3A. The integrated test piece 3B is formed by integrating large-diameter portions 5B with each of ends of a small-diameter portion 4B.

### Experiment 1

In Experiment 1, in the above test pieces each having a 72-mm axial basic dimension, a change in the axial dimension between before and after being heated was measured using a digital caliper.

The welded test piece 3A subjected to the first heating mode is indicated as Example 1. The welded test piece 3A subjected to the second heating mode is indicated as Example 2. The welded test piece 3A subjected to a typical heating treatment is indicated as Comparative Example. Although the second heating mode includes the heating treatment twice, an experiment in which only the re-solid solution treatment is conducted in the second heating mode is indicated as Reference Example 1.

The integrated test piece 3B subjected to the "H900" precipitation hardening treatment is indicated as Reference Example 2. The integrated test piece 3B subjected to the "H1025" precipitation hardening treatment is indicated as Reference Example 3. The "H1025" heating treatment in Reference Example 3 refers to heating of a test piece of stainless steel SUS630 in a range from 540 degrees C to 560 degrees C.

Comparative Example refers to conducting the "H900" precipitation hardening treatment before the welding treatment. In order to obtain the dimensional change, two pieces forming the welded test piece 3A abut on each other.

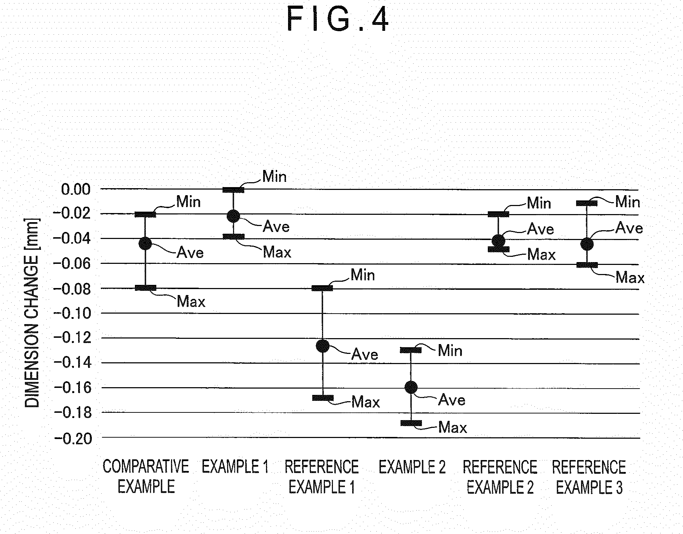

Fig. 4 shows a maximum value (Max), a minimum value (Min) and an average value (Ave) in the dimensional change after the heating treatment in a plurality of experiments conducted in each of Examples 1 and 2, Comparative Example and Reference Examples 1 to 3.

As shown in Fig. 4, a dimensional change in Example 1 is substantially the same as a dimensional change in each of Reference Examples 2 and 3 using the integrated test piece 3B. In contrast, since the re-solid solution treatment is conducted in Example 2 and Reference Example 1, the change in dimension after the heating treatment is larger than those in Reference Examples 2 and 3. Accordingly, when the second heating mode is to be performed, it is necessary to design a pressure sensor in consideration of the change in dimension.

### Experiment 2

In Experiment 2, one sample of each of Examples 1 and 2, Reference Example 1 and Comparative Example was prepared. The samples were the welded test pieces 3A shown in Fig. 3A. As shown in Fig. 3A, each of the welded test pieces 3A was cut at a position L1 axially away ±7 mm from the abutting portion (weld portion L0) of the small-diameter portions 4A. The cut small-diameter portion 4A including the abutting portion was cut along an axial position L2 to provide the sample. The cut sample was buried in a resin member (not shown) and polished. In Experiment 2, a surface of the sample was treated with a Marble's reagent and observed using a metallograph. A ratio of the Marble's reagent is 4 g of copper sulfate, 20 cc of hydrochloric acid, and 20 cc of water. The used metallograph was a "VC3500 (model number) Digital Fine Scope (product name)" manufactured by OMRON Corporation.

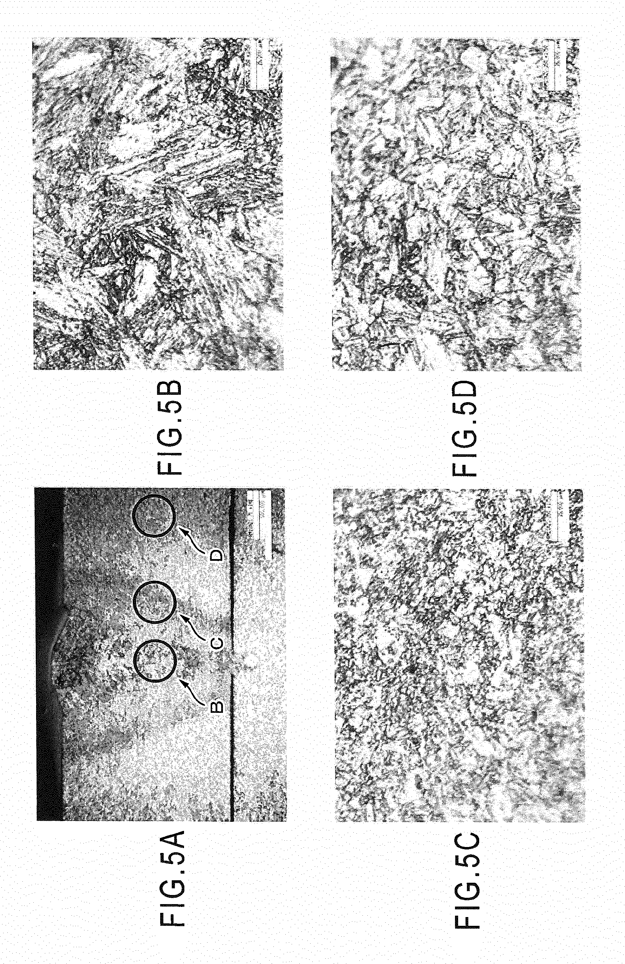

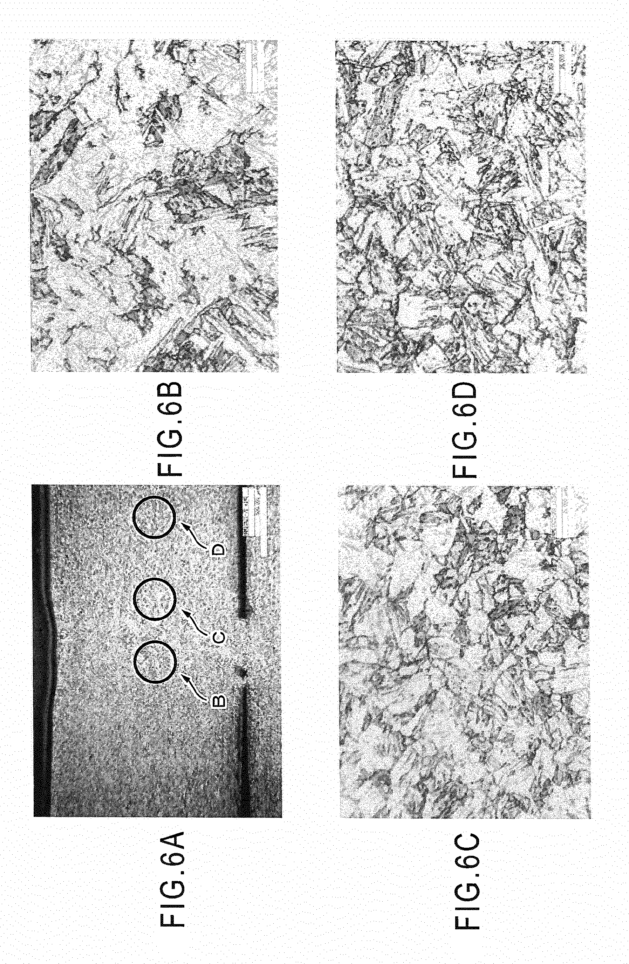

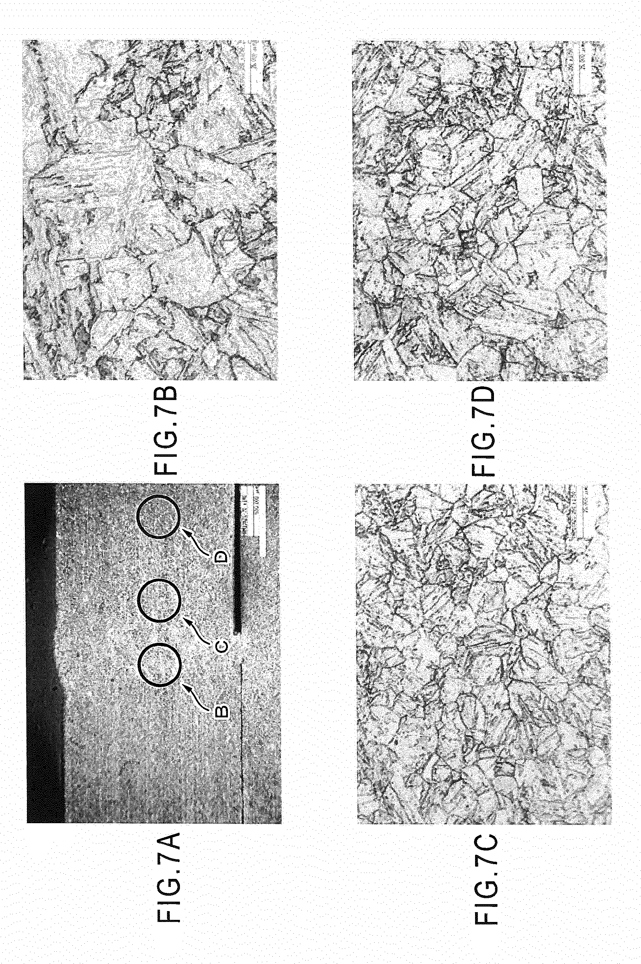

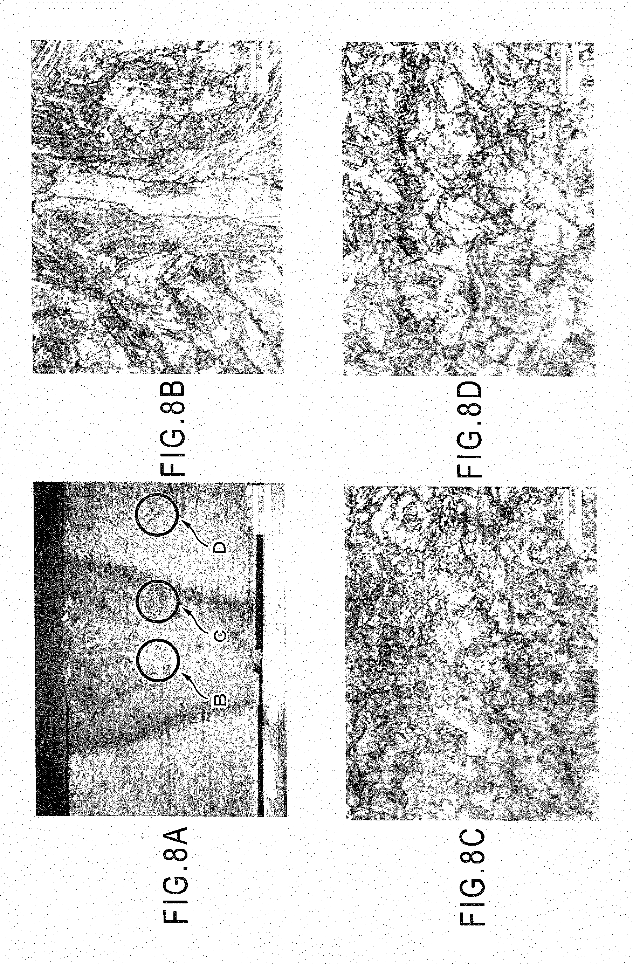

Copies of the microphotographs in Example 1 are shown in Figs. 5A to 5D. Copies of the microphotographs in Example 2 are shown in Figs. 6A to 6D. Copies of the microphotographs in Reference Example 1 are shown in Figs. 7A to 7D. Copies of the microphotographs in Comparative are shown in Figs. 8A to 8D.

Figs. 5A to 5D show the copies of the microphotographs in Example 1.
In Fig. 5A, the weld portion is shown in the middle and the surroundings of the weld portion are shown on the right and the left sides.
A part indicated by an arrow B in Fig. 5A indicates a position of the weld portion. An enlarged microphotograph of the part is shown in Fig. 5B.
A part indicated by an arrow C indicates a thermally affected position slightly away from the weld portion. An enlarged microphotograph of the part is shown in Fig. 5C.
A part indicated by an arrow D indicates a thermally unaffected position away from the weld portion. An enlarged microphotograph of the part is shown in Fig. 5D.

As shown in Fig. 5A, it is observed that a welding line (which is light, though) is left on each of the weld portion indicated by the arrow B and the thermally affected portion indicated by the arrow C.

Precipitate is observed in a metal texture of the weld portion shown in Fig. 5B and in a metal texture of the thermally affected portion shown in Fig. 5C, which are slightly different from a metal texture shown in Fig. 5D.

Figs. 6A to 6D show the copies of the microphotographs in Example 2. A part indicated by an arrow B in Fig. 6A indicates a position of the weld portion. An enlarged microphotograph of the part is shown in Fig. 6B. A part indicated by an arrow C indicates a position of the thermally affected portion slightly away from the weld portion. An enlarged microphotograph of the part is shown in Fig. 6C. A part indicated by an arrow D indicates a position unaffected from the welding treatment. An enlarged microphotograph of the part is shown in Fig. 6D.

As shown in Fig. 6A, no welding line is observed on each of the weld portion indicated by the arrow B and the thermally affected portion indicated by the arrow C.

A metal texture of the weld portion shown in Fig. 6B and a metal texture of the thermally affected portion shown in Fig. 6C appear to be the same as a metal texture shown in Fig. 6D. It is deduced that this is because the metal texture is uniformly corroded by the re-solid solution treatment and recovered to a texture similar to a typical texture of stainless steel SUS630 after being subjected to a solution treatment. As described in Experiment 1, Example 2 shows a large dimensional change, which is deduced to be caused by the recovery of the texture..

Figs. 7A to 7D show the copies of the microphotographs in Reference Example 1. In Fig. 7A, the weld portion is shown in the middle and the surroundings of the weld portion are shown on the right and the left sides. A part indicated by an arrow B in Fig. 7A indicates a position of the weld portion. An enlarged microphotograph of the part is shown in Fig. 7B. A part indicated by an arrow C indicates a position of the thermally affected portion slightly away from the weld portion. An enlarged microphotograph of the part is shown in Fig. 7C. A part indicated by an arrow D indicates a thermally unaffected position away from the weld portion. An enlarged microphotograph of the part is shown in Fig. 7D.

As shown in Fig. 7A, no welding line is observed on each of the weld portion indicated by the arrow B and the thermally affected portion indicated by the arrow C.

No black precipitate is observed in a metal texture of the weld portion shown in Fig. 7B and in a metal texture of the thermally affected portion shown in Fig. 7C. This is deduced to be attributed to no precipitation hardening treatment applied in Reference Example 1.

Figs. 8A to 8D show the copies of the microphotographs in Comparative. In Fig. 8A, the weld portion is shown in the middle and the surroundings of the weld portion are shown on the right and the left sides. A part indicated by an arrow B in Fig. 8A indicates a position of the weld portion. An enlarged microphotograph of the part is shown in Fig. 8B. A part indicated by an arrow C indicates a position of the thermally affected portion. An enlarged microphotograph of the part is shown in Fig. 8C. A part indicated by an arrow D indicates a thermally unaffected position away from the weld portion. An enlarged microphotograph of the part is shown in Fig. 8D.

As shown in Fig. 8A, a clear welding line is observed on each of the weld portion indicated by the arrow B and the thermally affected portion indicated by the arrow C.

It is observed that a metal texture of the weld portion shown in Fig. 8B and a metal texture of the thermally affected portion shown in Fig. 8C are apparently different from a metal texture shown in Fig. 8D.

As shown in Figs. 5A to 8D, it is observed in Example 1 that, although the texture is not recovered, precipitate is formed in the texture of the thermally affected portion near the weld portion. It is observed in Example 2 that the metal texture of the weld portion and the metal texture of the thermally affected portion are similar to a typical texture of stainless steel SUS630 after being subjected to a solution treatment as compared with Comparative Examples corresponding to conventional examples, so that it is deduced that an influence by the welding treatment is small in Example 2.

### Experiment 3

Experiment 3 is an HRC (Rockwell) hardness test to be performed using the samples used in Experiment 2.

The used hardness tester was a "MVK-H1 (model number)" device manufactured by Akashi Corporation.

The sample of Example 1 shown in Fig. 5A, the sample of Example 2 shown in Fig. 6A, the sample of Reference Example 1 shown in Fig. 7A, and the sample of comparative shown in Fig. 8A were measured in a right-left direction in the respective figures.

Since a width of a weld bead was 1.5 mm, a measurement pitch in the right-left direction was defined as 0.1 mm. The hardness test was performed in three columns from a top to a bottom of the figures according to a welding depth. A central part of the welding depth was located on a line passing a center of the part indicated by the arrow B. An upper part of the welding depth was located on an upper side from the central part (i.e., a shallow part of the weld portion). A lower part of the welding depth was located on a lower side from the central part (i.e., a deep part of the weld portion). With respect to the upper part, the central part and the lower part, the center of the weld portion was defined as 0, the right side thereof was defined as a plus position, and the left side thereof was defined as a minus position. A load was set so as to avoid a distance between centers of adjacent indentations from falling to 0.02 mm or less.

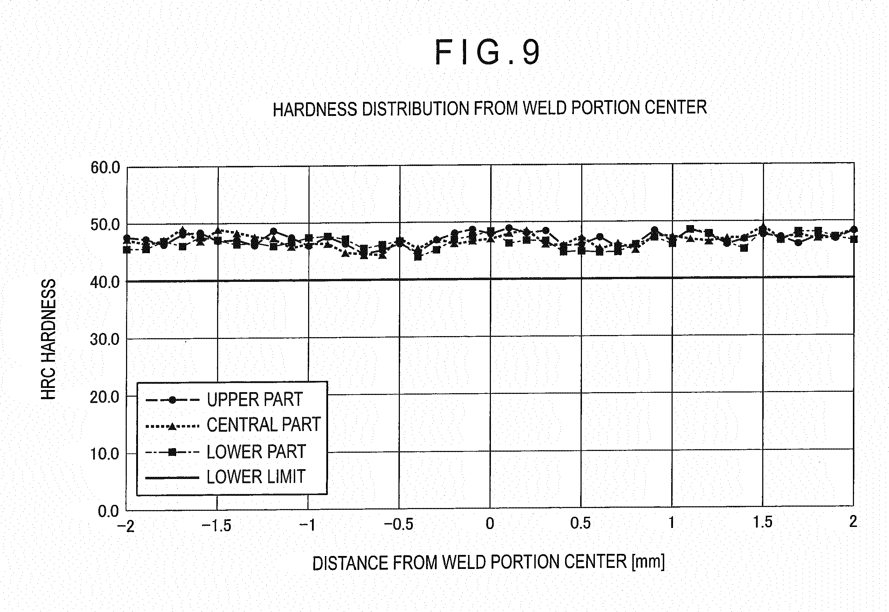

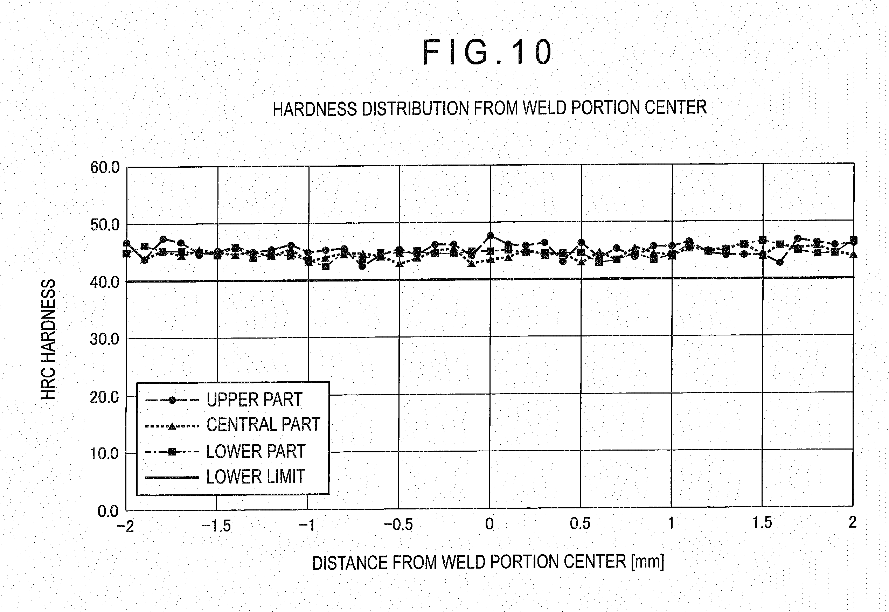

Fig. 9 is a graph in Example 1. In Fig. 9 and later-described Figs. 10 to 12, positions away about at -2 mm and +2 mm from the center of the weld portion are indicated by the arrow D.

In Fig. 9, values of the HRC hardness are approximately the same values at -2 mm position, the center of the weld portion and +2 mm position of each of the upper part, the central part and the lower part. All the values exceed the lower limit (40.0).

Fig. 10 is a graph in Example 2.

In Fig. 10, values of he HRC hardness are approximately the same values at -2 mm position, the center of the weld portion and +2 mm position of each of the upper part, the central part and the lower part. All the values exceed the lower limit (40.0). In Example 2, a fluctuation in the HRC hardness at the upper part, the central part and the lower part is smaller than that in Example 1.

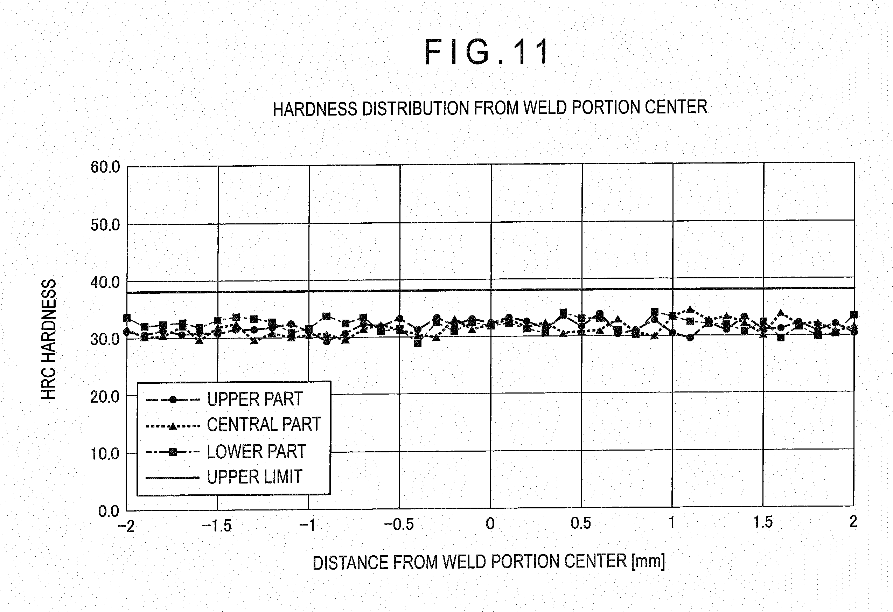

Fig. 11 is a graph in Reference Example 1.

In Fig. 11, values of the HRC hardness are approximately the same values at -2 mm position, the center of the weld portion and +2 mm position of each of the upper part, the central part and the lower part. All the values fall below the values of the HRC hardness in Example 2.

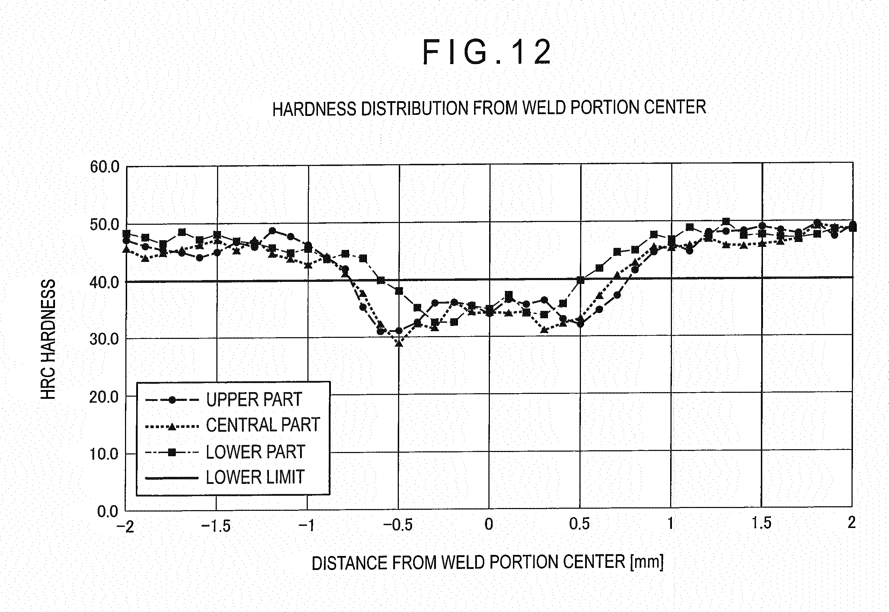

Fig. 12 is a graph in Comparative Example.

In Fig. 12, in each of the upper part, the central part and the lower part, values of the HRC hardness at and near -2 mm and +2 mm positions exceed the lower limit (40.0), but a value of the HRC hardness at the center of the weld portion falls below the lower limit.

Consequently, following advantages can be obtained according to the exemplary embodiment.
(1) Since the joint 10 and the sensor module metal member 20 are heated after being welded, strength of the weld portion and the surroundings thereof is increased In other words, it can be understood from Experiment 2 that Example 1, in which the precipitation hardening treatment was performed after the welding treatment, shows that the metal textures of the weld portion and the surrounding thermally affected portion are not so different from the metal texture of the parts other than the weld portion and the surrounding thermally affected portion as compared with Comparative Example (conventional examples) in which the precipitation hardening treatment was performed before the welding treatment, but precipitation hardening appears on the weld portion and the surrounding thermally affected portion by applying the precipitation hardening treatment after the welding treatment, resulting in formation of precipitates. Specifically, in Experiment 3, the values of the HRC hardness at the weld portion and the sides thereof exceed the lower limit in Example 1, but the values of the HRC hardness at and around the weld portion fall below the lower limit in Comparative Example. This is because the heating treatment after the welding treatment causes precipitation hardening to lead the hardness to meet the lower limit in Example 1, whereas the hardness is decreased by the welding treatment in Comparative Example.
   Accordingly, even when the measurement target fluid to be introduced to the sensor module metal member 20 has a high pressure, the sensor module metal member 20 and the joint 10 can be prevented from being broken at the weld portion and the surroundings thereof.
(2) When the heating treatment is performed in the first heating mode (i.e., precipitation hardening treatment) in which the joint 10 and the sensor module metal member 20 welded to each other are heated and left to stand until cool for precipitation hardening, the obtained strength of the joint 10 and the sensor module metal member 20 is not so stable as that obtained when the heating treatment is performed in the second heating mode. However, since the heating treatment after the welding treatment is only the precipitation hardening treatment, the manufacturing procedure can be simplified.
(3) When the heating treatment is performed in the second heating mode including: the re-solid solution treatment for uniforming rough texture of the joint 10 and the sensor module metal member 20 caused by being welded; and the precipitation hardening treatment in which, after the re-solid solution treatment, the joint 10 and the sensor module metal member 20 are heated and left to stand until cool for precipitation hardening, since the re-solid solution treatment and the precipitation hardening treatment are consecutively performed, more stable strength can be obtained. In other words, in comparison between Example 1 and Example 2, the measurement values of the hardness are almost flat in Example 2, whereas a fluctuation in the measurement values of the hardness is larger in Example 1 than in Example 2. Further, in Experiment 2, no recovery of the texture is observed in Example 1, but the recovery of the texture is observed in Example 2. It can be understood from the above that more stable strength can be obtained in Example 2 than in Example 1.
(4) Since the detector 30 having the strain gauge is attached to the diaphragm 22 of the sensor module metal member 20 after heating the joint 10 and the sensor module metal member 20, a measurement error caused by heating the strain gauge itself is avoidable.

It should be appreciated that the scope of the invention is not limited to the above-described exemplary embodiment(s) but includes modifications and improvements as long as such modifications and improvements are compatible with the invention as defined by the appended claims.

## Claims

1. A manufacturing method of a pressure sensor (1), the pressure sensor (1) comprising: a metal joint (10) attached to a target member and having an introduction hole (11A) configured to flow a measurement target fluid therethrough; and a sensor module metal member (20) comprising: a cylindrical portion (21) provided to the joint (10); a diaphragm (22) integrated with an end of the cylindrical portion (21); and a dent (20A) configured to receive the measurement target fluid from the introduction hole (11A), the manufacturing method comprising:
welding the joint (10) to the sensor module metal member (20); and
**characterized by** subsequently, heating the joint (10) and the sensor module metal member (20), wherein the heating after the welding of the joint (10) and the sensor module metal member (20) is a precipitation hardening treatment comprising heating and leaving the joint (10) and the sensor module metal member (20) to stand until cool for precipitation hardening.

2. A manufacturing method of a pressure sensor (1), the pressure sensor (1) comprising: a metal joint (10) attached to a target member and having an introduction hole (11A) configured to flow a measurement target fluid therethrough; and a sensor module metal member comprising: a cylindrical portion (21) provided to the joint (10); a diaphragm (22) integrated with an end of the cylindrical portion (21); and a dent (20A) configured to receive the measurement target fluid from the introduction hole (11A), the manufacturing method comprising:
welding the joint (10) to the sensor module metal member (20); and
**characterized by** subsequently, heating the joint (10) and the sensor module metal member (20), wherein the heating comprises: a re-solid solution treatment; and, after the re-solid solution treatment, a precipitation hardening treatment comprising heating and leaving to stand until cool for precipitation hardening.

3. The manufacturing method of a pressure sensor (1) according to claim 1 or claim 2, further comprising:
attaching a detector (30) comprising a strain gauge (31) to the diaphragm (22) of the sensor module metal member (20), after the heating of the joint (10) and the sensor module metal member (20).

## Patentansprüche

1. Verfahren zur Herstellung eines Drucksensors (1),
wobei der Drucksensor (1) Folgendes aufweist: ein Metallanschlussstück (10), das an einem Zielelement angebracht ist und ein Einführungsloch (11A) hat, das gestaltet ist, um ein Messzielfluid durch es hindurchströmen zu lassen; und ein Sensormodul-Metallelement (20), das Folgendes aufweist: einen zylindrischen Teil (21), mit dem das Anschlussstück (10) versehen ist; eine Membran (22), die in ein Ende des zylindrischen Teils (21) integriert ist; und eine Vertiefung (20A), die zur Aufnahme des Messzielfluids aus dem Einführungsloch (11A) gestaltet ist, wobei das Herstellungsverfahren Folgendes aufweist:
Schweißen des Anschlussstücks (10) an das Sensormodul-Metallelement (20); und
**gekennzeichnet durch** anschließendes Erhitzen des Anschlussstücks (10) und des Sensormodul-Metallelements (20), wobei das Erhitzen nach dem Schweißen des Anschlussstücks (10) und des Sensormodul-Metallelements (20) eine Ausscheidungshärtungsbehandlung ist, die Erhitzen und Stehenlassen des Anschlussstücks (10) und des Sensormodul-Metallelements (20) bis kühl zur Ausscheidungshärtung aufweist.

2. Verfahren zur Herstellung eines Drucksensors (1), wobei der Drucksensor (1) Folgendes aufweist: ein Metallanschlussstück (10), das an einem Zielelement angebracht ist und ein Einführungsloch (11A) hat, das gestaltet ist, um ein Messzielfluid durch es hindurchströmen zu lassen; und ein Sensormodul-Metallelement, das Folgendes aufweist: einen zylindrischen Teil (21), mit dem das Anschlussstück (10) versehen ist;
eine Membran (22), die in ein Ende des zylindrischen Teils (21) integriert ist; und eine Vertiefung (20A), die zur Aufnahme des Messzielfluids aus dem Einführungsloch (11A) gestaltet ist, wobei das Herstellungsverfahren Folgendes aufweist:
Schweißen des Anschlussstücks (10) an das Sensormodul-Metallelement (20); und
**gekennzeichnet durch** anschließendes Erhitzen des Anschlussstücks (10) und des Sensormodul-Metallelements (20), wobei das Erhitzen Folgendes aufweist: eine Mischkristallverfestigungsbehandlung; und nach der Mischkristallverfestigungsbehandlung eine Ausscheidungshärtungsbehandlung, die Erhitzen und Stehenlassen bis kühl zur Ausscheidungshärtung aufweist.

3. Verfahren zur Herstellung eines Drucksensors (1) nach Anspruch 1 oder Anspruch 2, das ferner Folgendes aufweist:
Anbringen eines Detektors (30), der einen Dehnungsmessstreifen (31) aufweist, an der Membran (22) des Sensormodul-Metallelements (20) nach dem Erhitzen des Anschlussstücks (10) und des Sensormodul-Metallelements (20) .

## Revendications

1. Procédé de fabrication d'un capteur de pression (1), le capteur de pression (1) comportant : un joint métallique (10) attaché à un élément cible et ayant un trou d'introduction (11A) configuré à des fins d'écoulement d'un fluide cible de mesure au travers de celui-ci ; et un élément métallique de module de capteur (20) comportant : une partie cylindrique (21) mise en oeuvre au niveau du joint (10) ; un diaphragme (22) intégré avec une extrémité de la partie cylindrique (21) ; et un enfoncement (20A) configuré pour recevoir le fluide cible de mesure en provenance du trou d'introduction (11A), le procédé de fabrication comportant :
l'étape consistant à souder le joint (10) au niveau de l'élément métallique de module de capteur (20) ; et
**caractérisé, par** la suite, par l'étape consistant à chauffer le joint (10) et l'élément métallique de module de capteur (20), dans lequel l'étape consistant à chauffer, après l'étape consistant à souder le joint (10) et l'élément métallique de module de capteur (20), est un traitement de durcissement par précipitation comportant les étapes consistant à chauffer et à laisser le joint (10) et l'élément métallique de module de capteur (20) reposer jusqu'à refroidissement pour un durcissement par précipitation.

2. Procédé de fabrication d'un capteur de pression (1), le capteur de pression (1) comportant : un joint métallique (10) attaché à un élément cible et ayant un trou d'introduction (11A) configuré à des fins d'écoulement d'un fluide cible de mesure au travers de celui-ci ; et un élément métallique de module de capteur comportant : une partie cylindrique (21) mise en oeuvre au niveau du joint (10) ; un diaphragme (22) intégré avec une extrémité de la partie cylindrique (21) ; et un enfoncement (20A) configuré pour recevoir le fluide cible de mesure en provenance du trou d'introduction (11A), le procédé de fabrication comportant :
l'étape consistant à souder le joint (10) au niveau de l'élément métallique de module de capteur (20) ; et
**caractérisé, par** la suite, par l'étape consistant à chauffer le joint (10) et l'élément métallique de module de capteur (20), dans lequel l'étape consistant à chauffer comporte : un re-traitement de solution solide ; et, après le re-traitement de solution solide, un traitement de durcissement par précipitation comportant les étapes consistant à chauffer et à laisser reposer jusqu'à refroidissement pour un durcissement par précipitation.

3. Procédé de fabrication d'un capteur de pression (1) selon la revendication 1 ou la revendication 2, comportant par ailleurs :
l'étape consistant à attacher un détecteur (30) comportant un extensomètre (31) sur le diaphragme (22) de l'élément métallique de module de capteur (20), après le chauffage du joint (10) et de l'élément métallique de module de capteur (20).
